Europäisches Patentamt

European Patent Office

Office européen des brevets

(11) Publication number: **0 041 334**
**A1**

## (12) EUROPEAN PATENT APPLICATION

(21) Application number: **81302199.5**

(22) Date of filing: **18.05.81**

(51) Int. Cl.³: **H 01 M 2/36**

(30) Priority: **02.06.80 GB 8017968**

(43) Date of publication of application:
**09.12.81 Bulletin 81/49**

(84) Designated Contracting States:
**AT BE DE FR GB IT NL SE**

(71) Applicant: CROMPTON BATTERIES LIMITED
Stephenson Street
Newport Gwent NPT OXJ(GB)

(72) Inventor: Dancer, Colin Frank
24 Garth Close Bassaleg
Newport Gwent(GB)

(72) Inventor: Lewis, Denis James
2 Oakley Street
Newport Gwent(GB)

(74) Representative: Jennings, Guy Kenneth et al,
GILL JENNINGS & EVERY 53/64 Chancery Lane
London WC2A 1HN(GB)

(54) **Battery filling system.**

(57) A level-sensitive filling device for fitting to a secondary electrical cell is formed as a plug (20) to replace the normal vent plug. The device includes inlet and outlet passages (1 and 2) respectively for connection to a water supply system and is controlled by a float (4) which, in use, is supported by the electrolyte (5) of the cell. The float (4) and the structure of the device around the openings (22 and 23) to the inlet and outlet passages are shaped to co-operate in such a way that when the correct level of electrolyte (5) is reached, the inlet and outlet passages (1 and 2) are substantially closed off from the body of the cell but not from one another. The shaping is such that the path of flow (6) from the inlet opening (22) to the outlet opening (23) is of reduced cross section in relation to the inlet and outlet passages (1 and 2) and the resultant flow of fluid from one passage (22) to the other passage (23) thus causes a reduction of pressure outside the closure (7) formed by the float (4) in relation to the pressure in the cell, this differential pressure preventing any further flow of water into the cell, but allowing the escape of gas generated in the cell.

Fig.1.

Fig.2.

GJE/181/57

Crompton Batteries Limited

- 1 -

Battery filling system

During the operation of secondary batteries, such as those of the lead acid or nickel cadmium types, water is lost by electrolysis during the charging operation. The amount lost varies according to the efficiency of the system and the duty cycle, but for modern industrial batteries on a daily discharge/charge cycle, it is typically necessary to make up this water loss every two weeks. Failure to make good this water loss leads to low electrolyte level and high electrolyte specific gravity and this in turn leads to low performance, and if the abuse is prolonged, permanent damage to the battery.

Many attempts have been made to combat this water loss by the use of catalytic vent plugs which recombine the gases given off. These however suffer from the disadvantage that they are subject to flooding or poisoning. The catalysts are costly and success has been limited even on quite small batteries.

The more common approach has been to reduce the labour involved in topping up by connecting all the cells of a battery to a central reservoir and fitting each cell with a level-sensitive filling device, which may operate on the air lock principle (similar to a chicken feeder) or with a float which controls flow along an inlet passage from the central reservoir. Whilst airlock systems are simpler in operation in that they have no moving parts, the latter are simpler to manufacture; they also give a more positive shut-off in the event of a leak in the cell container, when the air lock is lost and cells become over filled.

Existing designs suffer from the disadvantage that poor seating of the float valve (due for instance to foreign bodies) can cause over-filling. Also floats can stick open with the same result. In addition, with existing designs, a further opening in the cell lid is needed for access to the electrolyte for testing purposes.

According to the present invention, in a filling device for use with a float-controlled system, the float and the structure of the device around the openings to the inlet and outlet passages are shaped to co-operate in such a way that when the correct level of electrolyte is reached, the inlet and outlet passages are substantially closed off from the body of the cell but not from one another, and the resultant flow of fluid from one to the other causes a reduction of pressure in the outlet tube outside the closure formed by the float, in relation to the pressure in the cell, this differential pressure preventing any further flow of water into the cell.

This result is preferably achieved by shaping the co-operating parts in such a way that the path of flow from the inlet opening to the outlet opening is of reduced cross section in relation to the inlet and outlet passages. Thus, in accordance with Bernouilli's principle, fluid flowing along this path has a higher kinetic energy and lower pressure than fluid flowing in the inlet and outlet passages. The pressure reduction in relation to the pressure within the cell space prevents the passage of any water into the cell even though the closure made by the float does not constitute a complete seal. In practice, it is preferred that the seal should not be a perfect one since this allows gases generated by charging of the battery to escape through the closure.

The device is preferably in the form of a self-contained component which may be fitted to an existing cell in place of the normal vent plug. Alternatively, however, it may be built into the structure of the cell lid.

The float itself is preferably spherical and the shaping of the device in the region of the openings to the inlet and outlet passages is designed accordingly to co-operate with a spherical float, but this is not essential to achieve the result of the invention. In order to prevent a perfect seal being obtained, the seating surfaces may have a small degree of ovality, but other means of achieving this may be employed. The use of a spherical float has several advantages. Since it is completely symmetrical it does not matter at what angle it is presented to the seating and it need not be restrained as closely as a float of another shape since it is self-centering. The float has only a single point of contact with each of two guides provided within the body of the cell and can thus roll to its closed position with very low friction.

The inlet and outlet passages previously referred to may be spaced apart in a plug for the cell or alternatively they may be concentric and examples of these two alternative forms of device in accordance with the invention will now be described with reference to the accompanying drawings, in which:-

Figure 1 is a vertical sectional view of the upper part of a cell having a plug with spaced passages and showing a float in a lowered or "open" position;

Figure 2 is a view corresponding to Figure 1, but showing the float in a raised or "closed" position;

Figure 3 is a view similar to Figure 1 but showing concentric passages and a float in a lowered position;

Figure 4 is a view corresponding to Figure 3 but showing the float in a raised position; and

Figure 5 is a view similar to Figure 4 of a slightly modified construction.

In each of the constructions illustrated, the device is constructed as a self-contained component in the form of a plug 20 for fitting in the place of the normal vent plug. For this purpose, the plug 20 is formed with opposite projections 30 which co-operate with appropriate shaping of the opening in the top 3 of the cell to form a bayonet connection.  This has a camming action which tends to force the plug 20 downwardly to compress a sealing ring 31 between the top 3 of the cell and a flange 32 on the plug 20.

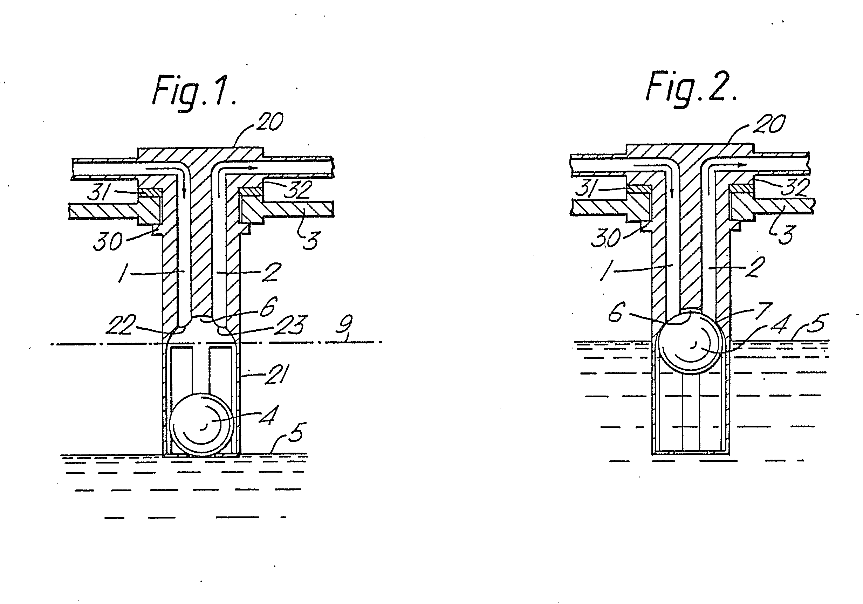

In the construction of Figures 1 and 2, an inlet passage 1 in the plug 20 leads from a common reservoir and an outlet passage 2 leads to a source of suction.  The lower part of the plug 20 forms guides 21 for a spherical float 4 which, as shown in Figure 1, is in a lowered position resting on the surface of electrolyte 5.  The opening to the inlet passage 1 is shown as 22 and that to the outlet passage 2 as 23, the shaping of the structure in the region of these openings being such that, when the cell is filled to the correct level shown as 9 and the float 4 is raised to the position of Figure 2, a circular closure is formed along a line 7 while a path of flow 6 is provided between the two passages 1 and 2.  As a consequence, water drawn along the passage 1 by suction in the passage 2 passes directly along the path 6 without entering the cell. The closure 7 by itself would not prevent water leaking into the cell since it does not form a perfect seal, but the path 6 is of smaller cross section than the passages 1 and 2, thus leading to a reduction in pressure in the fluid flowing along this path and in the outlet tube so that the pressure above the closure 7 is less than that below the closure and there is no tendency for the water to flow into the cell.  Moreover, the fact that the closure 7 does not form a perfect seal enables any gas generated within the cell during charging to escape through the closure.

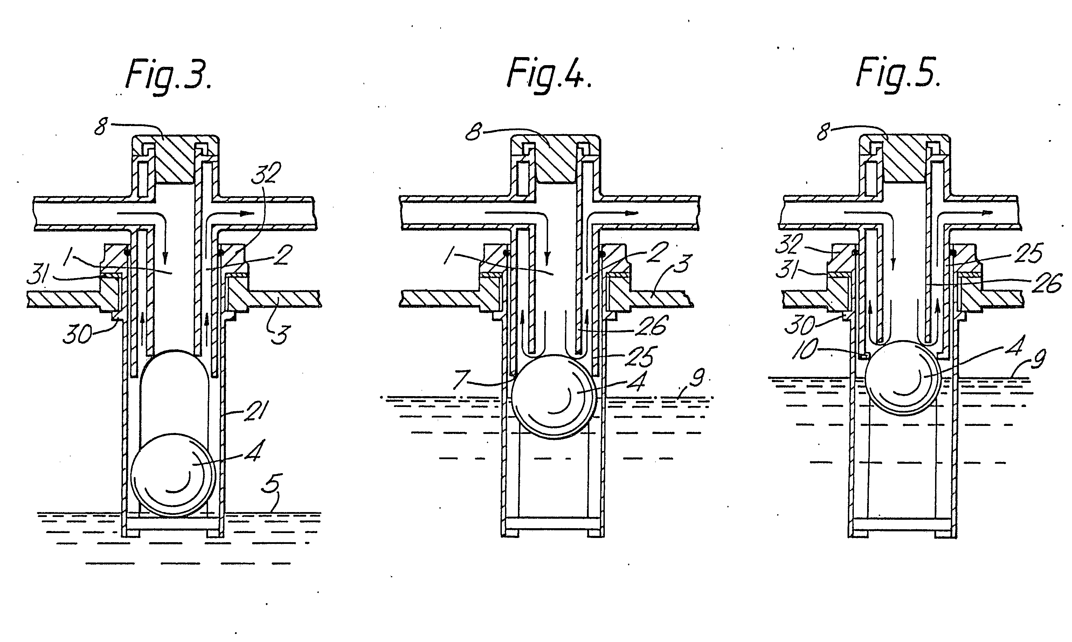

The alternative construction shown in Figures 3 and 4 operates on a similar principle and corresponding components are identified by the same reference numerals.  In this construction, the passages 1 and 2 are concentric, the inlet passage 1 lying within the outlet passage 2 which is annular.  This outlet passage preferably has a smaller cross sectional area than the passage 1. When the cell is filled to the correct level  and the float 4 is raised to the position of Figure 4, the closure 7 is formed between the float 4 and a tubular member 25.  Again the closure 7 does not form a perfect seal, but the reduced pressure resulting from the increased kinetic energy of fluid flowing through the relatively narrow annular gap between the float 4 and the lower edge of a tube 26 which separates the passage 1 from the passage 2 and also in the outlet passage 2 itself, prevents leakage through the closure 7 in the same way as described with reference to Figures 1 and 2.

An advantage of the construction shown in Figures 3 and 4 is that the tube 26 is closed off with a cap seal 8 which can be removed to allow access to the electrolyte with testing equipment.  Since the float 4 is spherical, in addition to the other advantages of this shape, it eases the entry of  a  hydrometer or other tube into the electrolyte 5.   As already mentioned, the fact that the closure 7 does not form a perfect seal, facilitates the escape of gas generated during charging, but if required, the cap 8 may be provided with a valve permitting the escape of gas from the cell, thus allowing venting of individual cells rather then employing a central gas handling system, which may be preferred.

In the modified construction of Figure 5, the lower end of the tube 25 is partially closed by a ring 10, thus reducing the size of the float 4 and of the closure 7. It is found that the use of a smaller float leads to more reliable operation, the only limitation on size being that the ring 10 must not restrict access to the cell for test purposes as previously described.

The level of liquid in an electric cell rises and falls on discharge due to gas entrapment in the active elements. This is quite independent of the liquid loss referred to above. Where this rise and fall is greater than the distance, when filled, between the electrolyte surface 9 and the closure 7 there is a danger of electrolyte being forced into the outlet tube and being lost from the cell. In other words, if a rise occurs after the cell has been filled to the level 9, the level will rise above the closure 7 with the result just mentioned. This may be overcome by the use of a float of greater height, e.g. comprising two or more spherical elements similar to the float 4 arranged on top of one another.

C L A I M S

1.      A level-sensitive filling device for fitting to, or forming part of a secondary electrical cell, the device including inlet and outlet passages for connection to a water supply system and being controlled by a float which, in use, is supported by the electrolyte of the cell, characterised in that the float and the structure of the device around the openings to the inlet and outlet passages are shaped to co-operate in such a way that when the correct level of electrolyte is reached, the inlet and outlet passages are substantially closed off from the body of the cell but not from one another, and the resultant flow of fluid from one to the other causes a reduction of pressure outside the closure formed by the float, in relation to the pressure in the cell, this differential pressure preventing any further flow of water into the cell.

2.      A device according to claim 1 in which the co-operating parts of the float and of the structure around the openings are so shaped that the path of flow from the inlet opening to the outlet opening is of reduced cross section in relation to the inlet and outlet passages.

3.      A device according to claim 1 or claim 2 in which the float is spherical and the shaping necessary to cause a reduction of pressure outside the closure formed by the float is applied to the structure around the openings.

4.     A device according to claim 3, in which the float comprises at least two spherical bodies arranged one above the other.

5.     A device according to any one of the preceding claims in which the closure formed by the float is less than complete, thus allowing the escape of any gas generated within the cell.

6.     A device according to claim 3 or claim 4 together with claim 5 in which the part of the structure which co-operates with the float has a slight degree of ovality.

7.     A device according to any one of the preceding claims in which the inlet and outlet passages are formed in a plug for the cell and are spaced apart across the plug.

8.     A device according to any one of claims 1 to 6 preceding claims in which the inlet and outlet passages are formed in a plug for the cell and are concentric.

9.     A device according to claim 8 in which the inner of the concentric passages extends to the top of the plug where it is closed by a removable cap.

10.     A level-sensitive filling device for fitting to, or forming part of a secondary electrical cell, substantially as described and as illustrated with reference to Figures 1 and 2, or Figures 3 and 4 or Figure 5 of the accompanying drawings.

Fig.1.

Fig.2.

0041334

Fig.3.

Fig.4.

Fig.5.

0041334

**0041334**

Application number

EP 81302199.5

# EUROPEAN SEARCH REPORT

European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 1 837 242 (VAN METER) <br> + Page 2, lines 62-70, 119-126; fig. 6 + <br> -- | 1,7 | H 01 M 2/36 |
| | GB - A - 2 011 157 (TUDOR) <br> + Abstract + <br> -- | 1 | |
| | GB - A - 1 499 914 (VARTA) <br> + Page 1, lines 34-75 + <br> ---- | 1 | |

**TECHNICAL FIELDS SEARCHED (Int. Cl.³)**

H 01 M

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims | |
|---|---|---|

| Place of search | Date of completion of the search | Examiner |
|---|---|---|
| VIENNA | 24-08-1981 | LUX |

EPO Form 1503.1   06.78